# EUROPÄISCHE PATENTANMELDUNG

(11) **EP 4 796 466 A1**
(43) Veröffentlichungstag der Anmeldung: **26.08.2026**
(21) Anmeldenummer: 26157839.7
(22) Anmeldetag: 11.02.2026
(51) Int. Cl.: B65G 13/04, B65G 13/11, B65G 13/06

(54) **ROLLENMODUL FÜR ROLLENFÖRDERER MIT WANNENARTIGEM GRUNDKÖRPER**

(30) Priorität: 20.02.2025 DE 102025106400
(71) Anmelder: Robert Bosch GmbH, 70442 Stuttgart (DE)
(72) Erfinder: Wlodarczyk, Sven, 74379 Ingersheim (DE)

(57) **Zusammenfassung**

Die Erfindung betrifft ein Rollenmodul (30) für einen Rollenförderer (10) mit Königswellenantrieb. Erfindungsgemäß ist ein Grundkörper eines Rollenmoduls (30) wannenartig und einstückig ausgebildet.

## Beschreibung

Die Erfindung betrifft ein Rollenmodul gemäß dem Oberbegriff von Anspruch 1 und einen Rollenförderer mit einem derartigen Rollenmodul.

Aus der EP 2 163 495 B1 ist ein Rollenförderer bekannt, der für vergleichsweise leichtes Fördergut ausgelegt ist. Die Förderrollen erstrecken sich über die gesamte Breite der Förderstrecke, wobei sie nur an ihren in Richtung der Rollenachse gegenüberliegenden Enden kreiszylindrische Abschnitte aufweisen, auf denen das Fördergut aufliegt. Bei dem Fördergut handelt es sich beispielsweise um näherungsweise rechteckige Transportplatten, welche beispielsweise innerhalb einer Produktionsanlage mit herzustellenden Werkstücken beladen sind. Die Förderrollen sind an ihren beiden in Richtung der Rollenachse gegenüberliegenden Enden mit jeweils einem einzigen Drehlager versehen. Der Antrieb der Förderrollen erfolgt mit einem sogenannten Königswellenantrieb, der auch im Rahmen der vorliegenden Erfindung Verwendung findet.

Aus der DE 10 2022 203 906 A1 ist ein ausgehend von der EP 2 163 495 B1 weiterentwickelter Rollenförderer bekannt, der für schwereres Fördergut geeignet ist. Bei dem Fördergut handelt es sich beispielsweise um Batteriemodule für elektrisch betriebene Kraftfahrzeuge, wobei der Rollenförderer bei deren Herstellung und/oder bei deren Demontage Verwendung findet. Die Steigerung der Tragfähigkeit wurde u.a. dadurch erreicht, dass zwei oder mehr gesonderte Spuren von kleinen Förderrollen vorgesehen sind. Jede Förderrolle ist für sich genommen mit jeweils zwei Drehlagern gelagert. Die Förderrollen zusammen mit der Drehlagerung und den beiden Antriebsrädern sind modulartig ausgebildet, wobei das entsprechende Rollenmodul an einem sich entlang einer Förderrichtung erstreckenden Tragprofil des Rollenförderers befestigt ist.

Im Rahmen der vorliegenden Erfindung soll ausgehend von der DE 10 2022 203 906 A1 ein Rollenförderer mit nochmals gesteigerter Tragfähigkeit geschaffen werden, um noch schwerere Batteriemodule zu transportieren. Dabei sollen das verwendete Tragprofil und die Breite der Förderstrecken, welche zwischen den Seitenführungen gemessen wird, gleich bleiben. Das Rollenmodul soll dementsprechend so ausgebildet sein, dass größere Drehlager Verwendung finden können, wobei die Förderrollen gleichzeitig massiver ausgebildet sind. Die Wandstärke der Förderrollen soll dabei so groß sein, dass bei Bedarf ein hülsenartiger Mantel aus Metall Verwendung finden kann, der wenigstens eine Wandstärke von 4 mm aufweist. Die Rollenmodule sollen außerdem so ausgebildet sein, dass sie die während des Förderbetriebs auftretenden Kräfte, die quer zur Förderrichtung wirken, aufnehmen können. Hierbei kann es sich um Kräfte handeln, die über die Seitenführung in das Rollenmodul eingeleitet werden. Es kann sich auch im Reibkräfte handeln, die über die Umfangsfläche der Förderrolle in das Rollenmodul eingeleitet werden. Die Rollenbaugruppen und der Antrieb sollen im beliebigen Abstand an dem Trägerprofil befestigbar sein. Dies erlaubt eine flexible Anpassung auf die Last und die Abmessung der Werkstückträger.

Gemäß Anspruch 1 wird vorgeschlagen, dass das Rollenmodul einen einstückigen Grundkörper umfasst, welcher unmittelbar an dem zugeordneten Tragprofil befestigbar ist, wobei der Grundkörper wannenartig ausgebildet ist, so dass er eine Rollenausnehmung bildet, die zur Förderebene hin offen ist, wobei die Antriebsbaugruppe einen Achskörper umfasst, welcher konzentrisch zur Rollenachse angeordnet ist, wobei er in Richtung der Rollenachse ein erstes und ein gegenüberliegendes zweites Ende hat, wobei er die Rollenausnehmung derart überspannt, dass er am ersten und am zweiten Ende jeweils senkrecht zur Förderebene am Grundkörper abgestützt ist, wobei die Förderrolle den Achskörper ringartig umgibt, so dass sie sich abschnittsweise in die Rollenausnehmung hinein erstreckt, wobei das erste und das zweite Drehlager innerhalb der Förderrolle angeordnet sind, wobei sie dort auf dem Achskörper aufgenommen sind, wobei das erste Antriebsrad den Achskörper ringartig umgibt, wobei es sich abschnittsweise in die Rollenausnehmung hinein erstreckt, wobei es unmittelbar mit der zugeordneten Förderrolle fest verbunden ist, wobei der Grundkörper im Bereich des ersten Endes des Achskörpers eine erste Seitenwand aufweist, die quer zur Rollenachse ausgerichtet ist, wobei das zweite Antriebsrad so groß ausgebildet ist, dass die Antriebswelle in Richtung der Rollenachse mit Abstand zur ersten Seitenwand außerhalb des Grundkörpers angeordnet ist.

Das erste und das zweite Antriebsrand sind vorzugsweise jeweils als Kegelzahnrad ausgebildet, wobei sie unmittelbar miteinander kämmen. Die genannten Kegelzahnräder sind vorzugsweise geradeverzahnt ausgebildet, wobei sie auch schrägverzahnt oder bogenverzahnt ausgebildet sein können. Das Tragprofil erstreckt sich vorzugsweise mit einer konstanten, im Wesentlichen rechteckigen Querschnittsform parallel zur Förderrichtung, wobei es höchst vorzugsweise aus Aluminium im Strangpressverfahren hergestellt ist. Die genannte Querschnittsform bildet vorzugsweise wenigstens eine hinterschnittene Nut, die höchst vorzugsweise T-förmig ausgebildet ist. Der Grundkörper und der nachfolgend erläuterte Hilfskörper sind vorzugsweise mit wenigstens einer hinterschnittenen Nut am Tragprofil verschraubbar, höchst vorzugsweise unter Verwendung wenigstens eines Nutensteins und/oder einer Hammerschraube. Der Achskörper ist vorzugsweise einstückig ausgebildet.

In den abhängigen Ansprüchen sind vorteilhafte Weiterbildungen und Verbesserungen der Erfindung angegeben.

Es kann vorgesehen sein, dass das Rollenmodul einen einstückigen Hilfskörper umfasst, der den Grundkörper unmittelbar berührt, so dass er relativ zum Grundkörper ausgerichtet ist, wobei der Hilfskörper unmittelbar an dem dem Grundkörper zugeordneten Tragprofil befestigbar ist, wobei das betreffende dritte Drehlager im Hilfskörper aufgenommen ist. Hierdurch wird es möglich, den Außendurchmesser der Förderrolle relativ zum Durchmesser der Antriebsräder zu vergrößern, so dass sich eine massive und tragfähige Förderrolle ergibt. Die Befestigung des Hilfskörpers ist dennoch stabil, wobei eine genaue Ausrichtung des ersten und des zweiten Antriebsrades für einen verschleißarmen Verzahnungseingriff gewährleistet ist.

Es kann vorgesehen sein, dass der Achskörper in Richtung der Rollenachse ausschließlich an seinem ersten Ende am Grundkörper gehalten ist. Dadurch stören Verformungen, die sich aus den Antriebskräften ergeben, den Zahnradeingriff nur wenig.

Es kann vorgesehen sein, dass dem Achskörper eine zur Rollenachse konzentrische erste Schraube zugeordnet ist, welche am ersten Ende stirnseitig in den Achskörper eingeschraubt ist, wobei sie den Grundkörper durchsetzt, wobei benachbart zur Schraube eine erste Stützausnehmung im Grundkörper vorgesehen ist, in welche der Achskörper formschlüssig eingreift, so dass er senkrecht zur Förderebene abgestützt ist. Die erste Schraube durchsetzt vorzugsweise die erste Seitenwand des Grundkörpers, insbesondere einen kreisrunden Durchbruch in der ersten Seitenwand. Auf der gegenüberliegenden Seite der Rollenausnehmung, nämlich am zweiten Ende des Achskörpers, hat der Grundkörper vorzugsweise eine zweite Stützausnehmung, in welche der Achskörper formschlüssig eingreift, so dass er senkrecht zur Förderebene abgestützt ist. Die erste und die zweite Stützausnehmung sind vorzugsweise zur Förderebene hin offen, so dass der Achskörper einfach am Grundkörper montierbar ist. Sie wirken dementsprechend nur bezüglich einer Kraft abstützend, die von der Förderebene weg gerichtet ist. Bei dieser Kraft handelt es sich vorzugsweise um die Gewichtskraft des Fördergutes, welches mit dem Rollenförderer transportiert wird.

Es kann vorgesehen sein, dass der Achskörper am ersten und/oder am zweiten Ende jeweils mit einem Paar von Schlüsselflächen versehen ist, welche formschlüssig in eine angepasste erste oder zweite Stützausnehmung im Grundkörper eingreifen, so dass der Achskörper gegen Verdrehen bezüglich der Rollenachse gesichert ist. Die entsprechende Verdrehsicherung ist besonders kostengünstig. Sie verhindert außerdem, dass sich die erste Schraube löst.

Es kann vorgesehen sein, dass das erste Antriebsrad wenigstens zwei Schnapphaken aufweist, welche sich in Richtung der Rollenachse erstrecken, wobei sie unmittelbar mit der Förderrolle verrastet sind. Die entsprechende Verbindung ist besonders kostengünstig, wobei sie einfach montiert werden kann. Die Schnapphaken sind vorzugsweise gleichförmig verteilt um die Rollenachse herum angeordnet, wobei sie höchst vorzugsweise untereinander gleich ausgebildet sind.

Es kann vorgesehen sein, dass zusätzlich zum formschlüssigen Eingriff zwischen den Schnapphaken und der Förderrolle weitere Formschlussmittel vorgesehen sind, die eine formschlüssige Übertragung des Drehmoments zwischen erstem Antriebsrad und Förderrolle bewirken. Hierdurch können die Schnapphaken so elastisch ausgebildet werden, dass die Montage des ersten Antriebsrades an der Förderrolle mit geringer Kraft erfolgen kann. Trotzdem kann die entsprechende Verbindung ein ausreichend hohes Drehmoment übertragen. Bei den genannten Formschlussmitteln handelt es sich vorzugsweise um stirnseitige Nuten an der Förderrolle, in welche angepasste Fortsätze am ersten Antriebsrad eingreifen.

Es kann ein gesonderter, einstückiger Abdeckkörper vorgesehen sein, welcher derart fest mit dem Grundkörper verbunden ist, dass er die Rollenausnehmung teilweise überdeckt, wobei die Förderrolle einen Durchbruch im Abdeckkörper so durchsetzt, dass die Förderebene mit Abstand zum Abdeckkörper angeordnet ist, wobei das erste Antriebsrad in Richtung der Rollenachse neben dem Abdeckkörper angeordnet ist. Hierdurch kann ein erstes Antriebsrad mit einem großen Durchmesser verwendet werden. Der Abdeckkörper ist vorzugsweise plattenartig ausgebildet, wobei er parallel zur Förderebene angeordnet ist. Der Abdeckkörper ist vorzugsweise ausschließlich am Grundkörper befestigt, insbesondere verschraubt. Die entsprechenden zweiten Schrauben sind vorzugsweise in den Ecken eines gedachten Rechtecks angeordnet

Es kann vorgesehen sein, dass die Förderrolle einstückig ausgebildet ist, wobei sie aus Kunststoff oder aus Metall besteht. Eine derartige Förderrolle kann große Kräfte abstützen.

Es kann vorgesehen sein, dass die Förderrolle einen hülsenartigen Mantel aus Metall aufweist, welcher die Umfangsfläche bildet, wobei innerhalb des Mantels ein Kern aus Kunststoff angeordnet ist, an welchem das erste und das zweite Drehlager befestigt sind. Eine derartige Förderrolle kann noch größere Kräfte abstützen, als die vorstehend erläuterte einstückige Förderrolle. Der genannte Mantel besteht vorzugsweise aus Stahl.

Schutz wird außerdem für einen Rollenförderer angestrebt, wobei der Rollenförderer wenigstens zwei Tragprofile umfasst, die sich parallel zur Förderrichtung erstrecken, wobei sie fest miteinander verbunden sind, wobei an jedem Tragprofil mehrere erfindungsgemäße Rollenmodule befestigt sind, wobei alle Rollenachsen parallel zueinander ausgerichtet sind, wobei die einem Tragprofil zugeordneten Antriebsachsen jeweils zusammenfallen. Die Rollenmodule sind vorzugsweise gleichförmig verteilt entlang des betreffenden Tragprofils angeordnet. Der Rollenförderer kann wenigstens einen Antriebsmotor umfassen, welcher abseits der Rollenmodule mit einer jeweils zugeordneten Antriebswelle in Drehantriebsverbindung steht, wobei der Antriebsmotor an dem der betreffenden Antriebswelle zugeordneten Tragprofil befestigt ist.

Es kann vorgesehen sein, dass jedem Tragprofil eine Antriebswelle zugeordnet ist, die mit allen Rollenmodulen des betreffenden Tragprofils in Antriebsverbindung steht, wobei wenigstens eine Hilfswelle vorgesehen ist, über die zwei benachbarte Antriebswellen in Drehantriebsverbindung stehen, wobei die Hilfswelle parallel zu den Rollenachsen ausgerichtet ist, wobei die genannte Drehantriebsverbindung abseits der Rollenmodule erfolgt. Der erfindungsgemäße Rollenförderer benötigt wegen der sehr tragfähigen Rollenmodule wesentlich weniger Rollenmodule als der bekannte Rollenförderer. Der Abstand der Rollenmodule kann damit größer ausgeführt werden als beim bekannten Rollenförderer. Der so entstandene Zwischenraum zwischen den Rollenmodulen kann für die Antriebsverbindung der beiden Antriebswellen genutzt werden. Die entsprechende Antriebskonstruktion kann in der Folge erheblich einfacher ausgeführt werden als beim bekannten Förderer. Insbesondere kann der Hilfskörper mit dem dritten Drehlager und dem zweiten Antriebsrad hierfür unverändert verwendet werden.

Es kann vorgesehen sein, dass zumindest einem Tragprofil eine Seitenführung zugeordnet ist, die sich parallel zur Förderrichtung erstreckt, wobei die Seitenführung ausschließlich an dem dem Tragprofil zugeordneten Abdeckkörpern befestigt ist, wobei sie an mehreren Abdeckkörpern befestigt ist. Im Servicefall kann die Baugruppe bestehend aus der Seitenführung und den zugeordneten Abdeckungen als Ganzes demontiert bzw. wieder montiert werden. Hierdurch wird Arbeitszeit eingespart. Bei der Erstmontage werden vorzugsweise zuerst die Abdeckkörper an den Grundkörpern befestigt und dann die Seitenführungen an den jeweils zugeordneten Abdeckkörpern, damit die gegenseitige Ausrichtung gegeben ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: einen Rollenförderer mit mehreren erfindungsgemäßen Rollenmodulen;
- Fig. 2: eine perspektivische Ansicht eines erfindungsgemäßen Rollenmoduls, welches auf einem zugeordneten Tragprofil befestigt ist;
- Fig. 3: eine perspektivische Teilansicht der Anordnung nach Fig. 1, bei der das erste Antriebsrad sichtbar ist;
- Fig. 4: einen Längsschnitt der Förderrolle mit dem Achskörper;
- Fig. 5: eine perspektivische Ansicht der Förderrolle vom ersten Ende des Achskörpers her; und
- Fig. 6: eine perspektivische Ansicht des wannenartigen Grundkörpers.

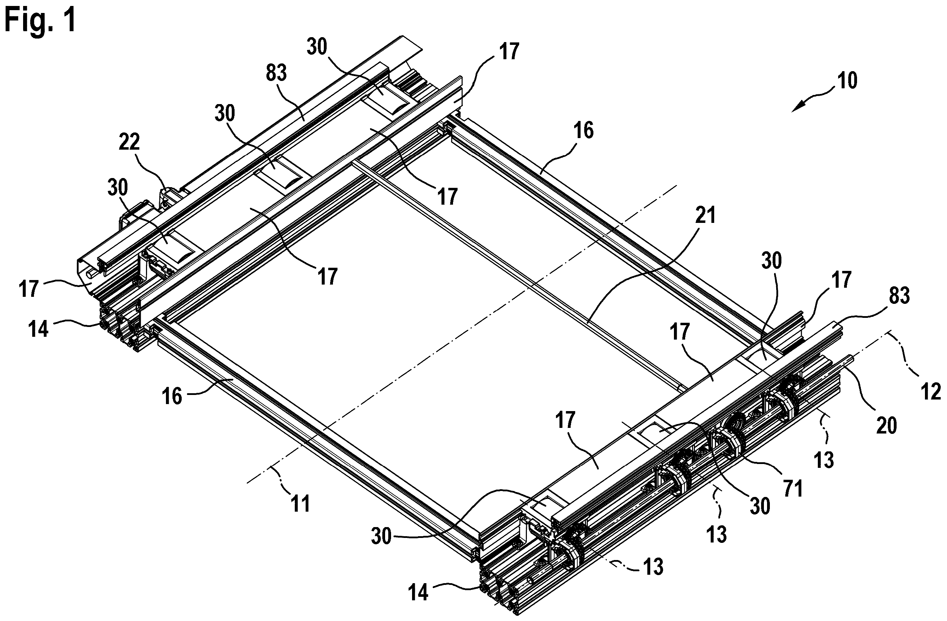

Figur 1 zeigt einen Rollenförderer 10 mit mehreren erfindungsgemäßen Rollenmodulen 30. Der Rollenförderer 10 umfasst zwei Tragprofile 14, die sich parallel zu einer Förderrichtung 11 erstrecken. Die Tragprofile 14 sind aus Aluminium im Strangpressverfahren hergestellt, so dass sie über ihre gesamte Länge eine konstante Querschnittsform haben. Die Tragprofile 14 sind über Verbindungsstreben 16 fest miteinander verbunden, wobei die Verbindungsstreben 16 ebenfalls als Aluminiumprofil ausgeführt sind.

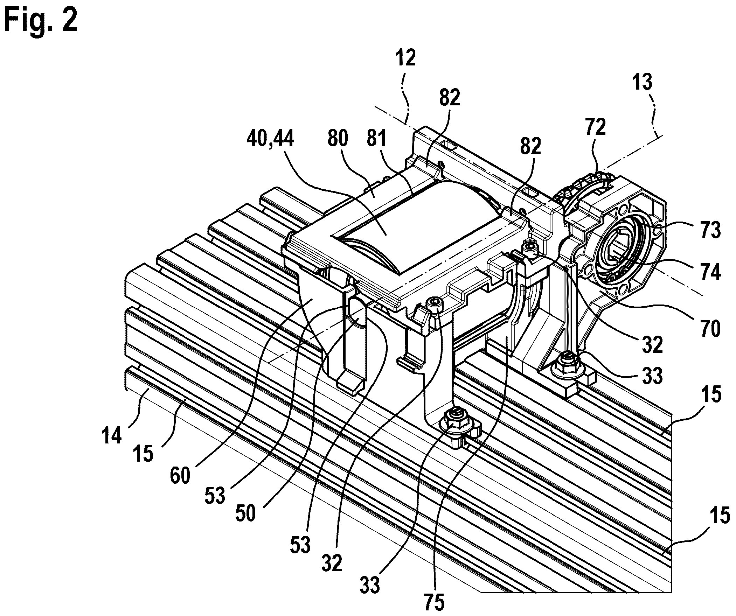

Auf jedem Tragprofil 14 sind mehrere Rollenmodule 30 befestigt, wobei die Rollenmodule 30 gleichförmig verteilt entlang der Förderrichtung 11 angeordnet sind. Jedes Rollenmodul 30 definiert eine Rollenachse 13 und eine Antriebsachse 12. Alle Rollenachsen 13 sind parallel zueinander und senkrecht zur Förderrichtung 11 ausgerichtet. Die Antriebsachsen 12, welche einem Tragprofil 14 zugeordnet sind, fallen zusammen, so dass alle Rollenmodule 30 eines Tragprofils 14 mit einer gemeinsamen Antriebswelle 20 angetrieben werden können. Ein entsprechender Antrieb ist aus der EP 2 163 495 B1 bekannt. Die Drehantriebsverbindung zwischen der Antriebswelle 20 und den Rollenmodulen 30 kann wahlweise mit oder ohne Rutschkupplung ausgebildet sein. Die Antriebswelle 20 hat über ihre gesamte Länge eine sechseckige Querschnittsform, wobei sie in einen angepassten Antriebsdurchbruch (Nr. 74 in Fig. 2) der betreffenden zweiten Antriebsräder eingreift.

Der gesamte Antrieb ist mit diversen Abdeckungen 17 eingehaust, um Verletzungen des Bedienpersonals vorzubeugen. In Fig. 1 ist ein Teil der Abdeckungen 17 entfernt, damit der innere Aufbau des Antriebs sichtbar ist.

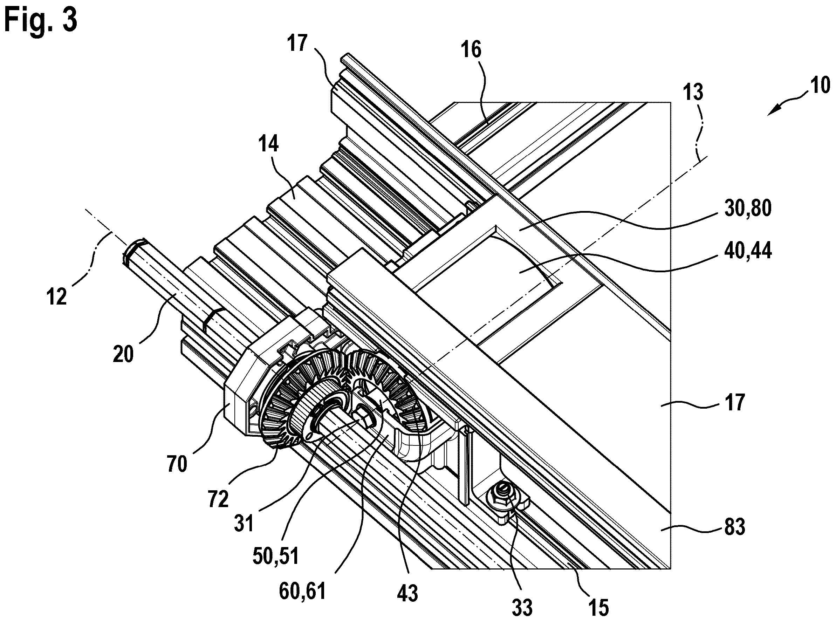

Hinzuweisen ist noch auf die Hilfswelle 21, die sich parallel zu den Rollenachsen 13 erstreckt. Über die Hilfswelle 21 stehen die beiden Antriebswellen 20 in Drehantriebsverbindung. Sie ist an ihren gegenüberliegenden Enden mit zu den ersten Antriebsrädern (Nr. 43 in Fig. 3) analogen Antriebsrädern versehen, wobei diese mit zu den zweiten Antriebsrädern (Nr. 72 in Fig. 2) analogen Antriebsrädern kämmen. Die zuletzt genannten Antriebsräder sind einschließlich des Hilfskörpers 71 und des dritten Drehlagers (Nr. 73 in Fig. 2) identisch zu den entsprechenden Teilen am erfindungsgemäßen Rollenmodul 30 ausgebildet.

Weiter sind in Fig. 1 zwei Seitenführungen 83 zu erkennen, die an den jeweils zugeordneten Rollenmodulen 30 befestigt sind. Außerdem ist der Antriebsmotor 22 in Form eines Elektro-Getriebemotors sichtbar, der ähnlich wie die Hilfswelle 21 mit der zugeordneten Antriebswelle 20 in Drehantriebsverbindung steht. In beiden Fällen erfolgt die Drehantriebsverbindung zur Antriebswelle 20 abseits der Rollenmodule 30.

Figur 2 zeigt eine perspektivische Ansicht eines erfindungsgemäßen Rollenmoduls 30, welches auf einem zugeordneten Tragprofil 14 befestigt ist. Das Tragprofil 14 ist hierfür mit mehreren hinterschnittenen Nuten 15 versehen, die im Querschnitt betrachtet vorzugsweise T-förmig ausgebildet sind. In die hinterschnittenen Nuten 15 greifen dritte Schrauben 33 ein, welche vorliegend als Hammerschrauben mit aufgeschraubten Bundmuttern ausgebildet sind, und über welche der Grundkörper 60 und der Hilfskörper 70 mit dem Tragprofil 14 verschraubt sind.

Der Grundkörper 60 und der Hilfskörper 70, die jeweils einstückig ausgebildet sind, liegen an einer Ausrichtkontur 75 unmittelbar aneinander an, so dass sie relativ zueinander genau ausgerichtet sind, wobei insbesondere die Rollenachse 13 und die Antriebsachse 12 senkrecht zueinander ausgerichtet sind. Der Hilfskörper 70 trägt ein drittes Drehlager 73, welches vorliegend als Radialrillenkugellager ausgebildet ist. In dem dritten Drehlager 73 ist ein zweites Antriebsrad 72 bezüglich der Antriebsachse 12 drehbar aufgenommen. Das zweite Antriebsrad 72 ist vorliegend in Form eines gerade verzahnten Kegelzahnrads ausgebildet, welches mit einem angepassten ersten Antriebsrad (Nr. 43 in Fig 3) kämmt, und welches drehfest mit der Förderrolle 40 verbunden ist.

In dem Grundkörper 60 ist die Förderrolle 40 bezüglich der Rollenachse 13 drehbar aufgenommen. Die Rollenausnehmung des wannenartigen Grundkörpers 60 ist mit einem Abdeckkörper 80 überdeckt, wobei der Abdeckkörper 80 einen rechteckigen Durchbruch 81 aufweist, durch den die Förderrolle 40 nach außen hinausragt, so dass ihre Umfangsfläche 44 das Fördergut im Bereich der Förderebene berühren kann. Der Abdeckkörper 80 ist mittels vier zweiten Schrauben 32 mit dem Grundkörper 60 verschraubt, wobei in Fig. 2 nur zwei davon sichtbar sind. Der Abdeckkörper 80 ist mit einer Befestigungskontur 82 versehen, an welcher die Seitenführung 83 befestigt ist.

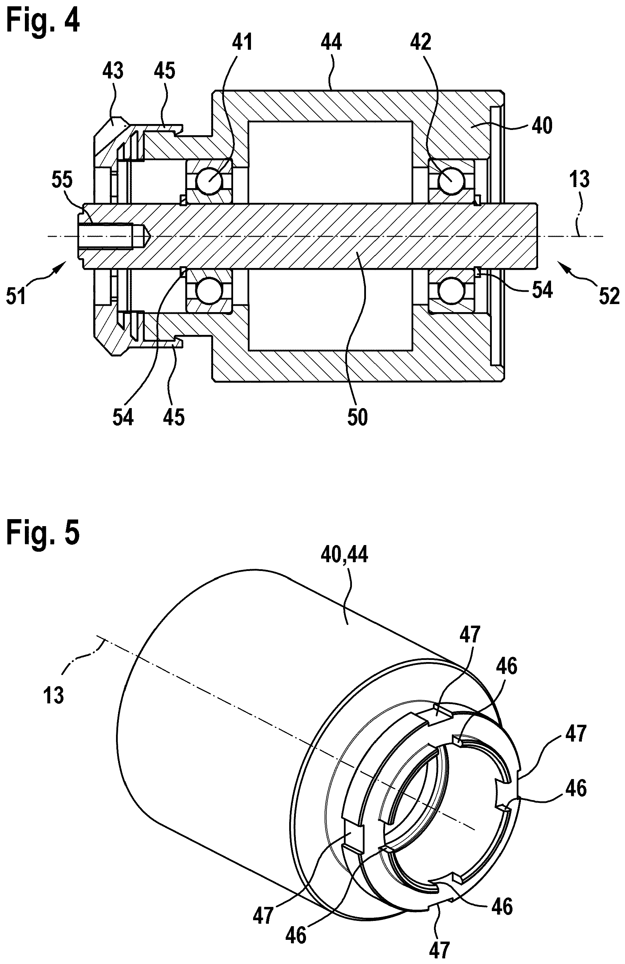

Weiter ist in Fig. 2 das zweite Ende (Nr. 52 in Fig. 4) des Achskörpers 50 sichtbar, welches mit einem Paar von Schlüsselflächen 53 versehen ist, die eben und parallel zueinander ausgebildet sind. Der Grundkörper 60 hat angepasste Gegenflächen, so dass der Achskörper 50 gegen Verdrehen um die Rollenachse 13 gesichert ist.

Figur 3 zeigt eine perspektivische Teilansicht der Anordnung nach Fig. 1, bei der das erste Antriebsrad 43 sichtbar ist. Das erste Ende 51 des Achskörpers 50 ist mittels einer ersten Schraube 31 mit der ersten Seitenwand 61 des Grundkörpers 60 verschraubt. Die erste Schraube 31 ist konzentrisch zur Rollenachse 13 angeordnet, wobei sie stirnseitig in den Achskörper 50 eingeschraubt ist, wobei sie einen kreisrunden Durchbruch in der ersten Seitenwand 61 durchsetzt.

Die Förderrolle 40 ist fest mit einem ersten Antriebsrad 43 verbunden, welches den Achskörper 50 umgibt, wobei es abschnittsweise in die Rollenausnehmung 65 des Grundkörpers 60 hineinragt. Das erste Antriebsrad 43 ist in Richtung der Rollenachse 13 neben dem Abdeckkörper 80 angeordnet, wobei der Abdeckkörper 80 die Rollenausnehmung 65 des Grundkörpers 60 teilweise überdeckt. Die Seitenführung 83 ist derart fest mit dem Abdeckkörper 80 verbunden, dass sie das erste Antriebsrad 43 nicht berührt.

Das erste Antriebsrad 43 ist ebenfalls als gerade verzahntes Kegelzahnrad ausgebildet, wobei es unmittelbar mit dem zweiten Antriebsrad 72 kämmt. Die bezüglich der Antriebsachse 12 drehbare Antriebswelle 20 hat über ihre gesamte Länge eine sechseckige Querschnittsform, wobei sie außerhalb des wannenartigen Grundkörpers 60 angeordnet ist. Sie ist insbesondere in Richtung der Rollenachse 13 mit Abstand zur ersten Seitenwand 61 und darüber hinaus mit Abstand zum Kopf der ersten Schraube 31 angeordnet.

Figur 4 zeigt einen Längsschnitt der Förderrolle 40 mit dem Achskörper 50. Die Schnittebene enthält die Rollenachse 13. Die Förderrolle 40 ist vorliegend einstückig ausgebildet. Sie hat eine bezüglich der Rollenachse 13 kreiszylindrische Umfangsfläche 44. Die Umfangsfläche 44 kann alternativ auch von einem gesonderten, hülsenartigen Mantel aus Metall gebildet sein, der vorzugsweise eine Wanddicke von wenigstens 4 mm aufweist. Die Förderrolle 40 ist bezüglich der Rollenachse 13 rohrartig ausgebildet, so dass sie den Achskörper 50 ringartig umgibt. Innerhalb der Förderrolle 40 sind ein erstes Drehlager 41 und ein zweites Drehlager 42 aufgenommen, die vorliegend jeweils als Radialrillenkugellager ausgebildet sind. Die zur Rollenachse 13 konzentrischen Innenringe des ersten Drehlagers 41 und des zweiten Drehlagers 42 werden vom Achskörper 50 durchsetzt, der über seine gesamte Länge im Wesentlichen kreiszylindrisch bezüglich der Rollenachse 13 ausgebildet ist. Der axiale Halt am ersten Drehlager 41 und am zweiten Drehlager 42 wird jeweils mittels eines Sicherungsrings 54 bewirkt, der in einer angepassten Nut im Achskörper 50 aufgenommen ist.

Weiter sind in Fig. 4 die Schnapphaken 45 zu erkennen, mit welchen das erste Antriebsrad 43 unmittelbar auf die Förderrolle 40 aufgeschnappt ist. Die Schnapphaken 45 erstrecken sich parallel zur Rollenachse 13, wobei sie biegeelastisch ausgebildet sind.

Darüber hinaus ist in Fig. 4 das erste Gewinde 55 am Achskörper 50 zu erkennen, in welches die erste Schraube 31 eingeschraubt ist.

Figur 5 zeigt eine perspektivische Ansicht der Förderrolle 40 vom ersten Ende des Achskörpers her. Zu erkennen sind die parallel zur Rollenachse 13 verlaufenden Nuten 47, welche an die Schnapphaken 45 angepasst sind. Diese Nuten 47 bewirken bereits eine formschlüssige Drehmitnahme zwischen dem ersten Antriebsrad 43 und der Förderrolle 40. Zusätzlich zu den Schnapphaken am ersten Antriebsrad sind weitere Formschlussmittel 46 an der Förderrolle 40 vorgesehen, in welche angepasste Gegenformschlussmittel am ersten Antriebsrad formschlüssig eingreifen. Die vorliegend vier Formschlussmittel 46 sind jeweils als stirnseitige Nut ausgebildet, welche radial zur Rollenachse 13 verläuft.

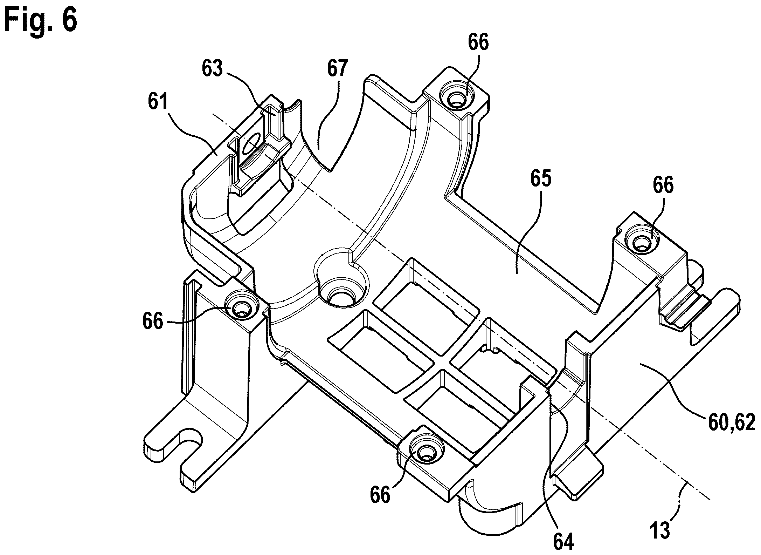

Figur 6 zeigt eine perspektivische Ansicht des wannenartigen Grundkörpers 60. Der einstückige Grundkörper 60 ist beispielsweise aus Aluminium oder aus Zink im Druckgussverfahren hergestellt. Der Grundkörper 60 bildet eine Rollenausnehmung 65, die mit Abstand an die Förderrolle 40 angepasst ist. An der Oberseite hat der Grundkörper 60 insgesamt vier zweite Gewinde 66, die in den Ecken eines gedachten Rechtecks angeordnet sind. Die ebenen Flächen, welche die zweiten Gewinde 66 umgeben, liegen in einer gemeinsamen Ebene, wobei am Abdeckkörper 80 entsprechende Gegenflächen angeordnet sind.

Die Form des Grundkörpers 60 ist so ausgelegt, dass sie mit einem zweiteiligen Gusswerkzeug herstellbar ist, welches senkrecht zur Förderebene öffnet, wobei es mit sehr wenigen Formschiebern auskommt. Die erste Stützausnehmung 63 und die zweite Stützausnehmung 64 sind dementsprechend nach oben offen ausgebildet, so dass sie nur die nach unten wirkende Gewichtskraft, welche auf den Achskörper wirkt, abstützen. Die ersten Stützausnehmungen 63 und die zweiten Stützausnehmungen 64 haben jeweils zwei parallel gegenüberliegende Seitenwände, welche senkrecht zur Förderebene und parallel zur Rollenachse 13 ausgerichtet sind. Diese sind jeweils an zugeordnete Schlüsselflächen (Nr. 53 in Fig. 2) am Achskörper im Sinne einer Verdrehsicherung angepasst.

Im Bereich der ersten Seitenwand 61 hat der Grundkörper 60 einen Antriebsdurchbruch 74, welcher vom ersten Antriebsrad 43 durchsetzt wird, so dass es mit dem zweiten Antriebsrad 72 kämmen kann. Alle übrigen Durchbrüche und Ausnehmungen am Grundkörper 60 dienen in erster Linie der Materialeinsparung. Sie sind so angeordnet und dimensioniert, dass die versteifende Wirkung der Wannenform möglichst weitgehend erhalten bleibt.

Der Grundkörper 60 und der Abdeckkörper (Nr. 80 in Fig. 3) sind vorzugsweise so auf die Förderrolle (Nr. 40 in Fig. 3) abgestimmt, dass alle Spalte, in welche sich Gegenstände auf Grund der Drehbewegung der Förderrolle einziehen könnten, kleiner als 5 mm sind.

### Bezugszeichen

- 10: Rollenförderer
- 11: Förderrichtung
- 12: Antriebsachse
- 13: Rollenachse
- 14: Tragprofil
- 15: hinterschnittene Nut
- 16: Verbindungsstrebe
- 17: Abdeckung

- 20: Antriebswelle
- 21: Hilfswelle
- 22: Antriebsmotor

- 30: Rollenmodul
- 31: erste Schraube
- 32: zweite Schraube
- 33: dritte Schraube

- 40: Förderrolle
- 41: erstes Drehlager
- 42: zweites Drehlager
- 43: erstes Antriebsrad
- 44: Umfangsfläche
- 45: Schnapphaken
- 46: Formschlussmittel
- 47: Nut

- 50: Achskörper
- 51: erstes Ende
- 52: zweites Ende
- 53: Schlüsselfläche
- 54: Sicherungsring
- 55: erstes Gewinde

- 60: Grundkörper
- 61: erste Seitenwand
- 62: zweite Seitenwand
- 63: erste Stützausnehmung
- 64: zweite Stützausnehmung
- 65: Rollenausnehmung
- 66: zweites Gewinde
- 67: Antriebsdurchbruch

- 70: Hilfskörper
- 71: Hilfskörper für Antrieb
- 72: zweites Antriebsrad
- 73: drittes Drehlager
- 74: Antriebsdurchbruch
- 75: Ausrichtkontur

- 80: Abdeckkörper
- 81: Durchbruch
- 82: Befestigungskontur
- 83: Seitenführung
- 84: Ausnehmung

## Patentansprüche

1. Rollenmodul (30) zur Verwendung in einem Rollenförderer (10), wobei dem Rollenmodul (30) ein Tragprofil (14) des Rollenförderers (10) zugeordnet ist, welches sich parallel zu einer Förderrichtung (11) erstreckt, wobei das Rollenmodul (30) eine Förderrolle (40) umfasst, die mittels eines ersten (41) und eines zweiten Drehlagers (42) bezüglich einer Rollenachse (13) drehbar gelagert ist, wobei die Förderrolle (40) mit einem ersten Antriebsrad (43) drehfest verbunden ist, wobei ein zweites Antriebsrad (72) mit einem dritten Drehlager (73) bezüglich einer zur Förderrichtung (11) parallelen Antriebsachse (12) drehbar gelagert ist, wobei die Antriebsachse (12) senkrecht zur Rollenachse (13) ausgerichtet ist, wobei das erste und das zweite Antriebsrad (43; 72) in Drehantriebsverbindung stehen, wobei das zweite Antriebsrad (72) mit einer zugeordneten, bezüglich der Antriebsachse (12) drehbaren Antriebswelle (20) des Rollenförderers (10) in Drehantriebsverbindung bringbar ist, wobei eine Förderebene parallel zur Antriebsachse (12) und zur Rollenachse (13) ausgerichtet ist, wobei sie eine Umfangsfläche (44) der Förderrolle (40) tangential berührt,
**dadurch gekennzeichnet, dass** das Rollenmodul (30) einen einstückigen Grundkörper (60) umfasst, welcher unmittelbar an dem zugeordneten Tragprofil (14) befestigbar ist, wobei der Grundkörper (60) wannenartig ausgebildet ist, so dass er eine Rollenausnehmung (65) bildet, die zur Förderebene hin offen ist, wobei die Antriebsbaugruppe einen Achskörper (50) umfasst, welcher konzentrisch zur Rollenachse (13) angeordnet ist, wobei er in Richtung der Rollenachse (13) ein erstes (51) und ein gegenüberliegendes zweites Ende (52) hat, wobei er die Rollenausnehmung (65) derart überspannt, dass er am ersten (51) und am zweiten Ende (52) jeweils senkrecht zur Förderebene am Grundkörper (60) abgestützt ist, wobei die Förderrolle (40) den Achskörper (50) ringartig umgibt, so dass sie sich abschnittsweise in die Rollenausnehmung (65) hinein erstreckt, wobei das erste (41) und das zweite Drehlager (42) innerhalb der Förderrolle (40) angeordnet sind, wobei sie dort auf dem Achskörper (50) aufgenommen sind, wobei das erste Antriebsrad den Achskörper (50) ringartig umgibt, wobei es sich abschnittsweise in die Rollenausnehmung (65) hinein erstreckt, wobei es unmittelbar mit der zugeordneten Förderrolle (40) fest verbunden ist, wobei der Grundkörper (60) im Bereich des ersten Endes (51) des Achskörpers (50) eine erste Seitenwand (61) aufweist, die quer zur Rollenachse (13) ausgerichtet ist, wobei das zweite Antriebsrad so groß ausgebildet ist, dass die Antriebswelle (20) in Richtung der Rollenachse (13) mit Abstand zur ersten Seitenwand (61) außerhalb des Grundkörpers (60) angeordnet ist.

2. Rollenmodul (30) nach Anspruch 1,
wobei das Rollenmodul (30) einen einstückigen Hilfskörper (70) umfasst, der den Grundkörper (60) unmittelbar berührt, so dass er relativ zum Grundkörper (60) ausgerichtet ist, wobei der Hilfskörper (70) unmittelbar an dem dem Grundkörper (60) zugeordneten Tragprofil (14) befestigbar ist, wobei das betreffende dritte Drehlager (73) im Hilfskörper (70) aufgenommen ist.

3. Rollenmodul (30) nach einem der vorstehenden Ansprüche,
wobei der Achskörper (50) in Richtung der Rollenachse (13) ausschließlich an seinem ersten Ende (51) am Grundkörper (60) gehalten ist.

4. Rollenmodul (30) nach Anspruch 3,
wobei dem Achskörper (50) eine zur Rollenachse (13) konzentrische erste Schraube (31) zugeordnet ist, welche am ersten Ende (51) stirnseitig in den Achskörper (50) eingeschraubt ist, wobei sie den Grundkörper (60) durchsetzt, wobei benachbart zur Schraube (31) eine erste Stützausnehmung (63) im Grundkörper (60) vorgesehen ist, in welche der Achskörper (50) formschlüssig eingreift, so dass er senkrecht zur Förderebene abgestützt ist.

5. Rollenmodul (30) nach einem der vorstehenden Ansprüche,
wobei der Achskörper (50) am ersten (51) und/oder am zweiten Ende (52) jeweils mit einem Paar von Schlüsselflächen (53) versehen ist, welche formschlüssig in eine angepasste erste (63) oder zweite Stützausnehmung (64) im Grundkörper (60) eingreifen, so dass der Achskörper (50) gegen Verdrehen bezüglich der Rollenachse (13) gesichert ist.

6. Rollenmodul (30) nach einem der vorstehenden Ansprüche,
wobei das erste Antriebsrad (43) wenigstens zwei Schnapphaken (45) aufweist, welche sich in Richtung der Rollenachse (13) erstrecken, wobei sie unmittelbar mit der Förderrolle (40) verrastet sind.

7. Rollenmodul (30) nach Anspruch 6,
wobei zusätzlich zum formschlüssigen Eingriff zwischen den Schnapphaken (45) und der Förderrolle (40) weitere Formschlussmittel (46) vorgesehen sind, die eine formschlüssige Übertragung des Drehmoments zwischen erstem Antriebsrad und Förderrolle (40) bewirken.

8. Rollenmodul (30) nach einem der vorstehenden Ansprüche,
wobei ein gesonderter, einstückiger Abdeckkörper (80) vorgesehen ist, welcher derart fest mit dem Grundkörper (60) verbunden ist, dass er die Rollenausnehmung (65) teilweise überdeckt, wobei die Förderrolle (40) einen Durchbruch (81) im Abdeckkörper (80) so durchsetzt, dass die Förderebene mit Abstand zum Abdeckkörper (80) angeordnet ist, wobei das erste Antriebsrad in Richtung der Rollenachse (13) neben dem Abdeckkörper (80) angeordnet ist.

9. Rollenmodul (30) nach einem der vorstehenden Ansprüche,
wobei die Förderrolle (40) einstückig ausgebildet ist, wobei sie aus Kunststoff oder aus Metall besteht.

10. Rollenmodul (30) nach einem der Ansprüche 1 bis 8,
wobei die Förderrolle (40) einen hülsenartigen Mantel aus Metall aufweist, welcher die Umfangsfläche (44) bildet, wobei innerhalb des Mantels ein Kern aus Kunststoff angeordnet ist, an welchem das erste (41) und das zweite Drehlager (42) befestigt sind.

11. Rollenförderer (10) mit wenigstens zwei Tragprofilen (14), die sich parallel zur Förderrichtung (11) erstrecken, wobei sie fest miteinander verbunden sind, wobei an jedem Tragprofil (14) mehrere Rollenmodule (30) befestigt sind, die jeweils nach einem der vorstehenden Ansprüche ausgebildet sind, wobei alle Rollenachsen (13) parallel zueinander ausgerichtet sind, wobei die einem Tragprofil (14) zugeordneten Antriebsachsen (12) jeweils zusammenfallen.

12. Rollenförderer (10) nach Anspruch 11,
wobei jedem Tragprofil (14) eine Antriebswelle (20) zugeordnet ist, die mit allen Rollenmodulen (30) des betreffenden Tragprofils (14) in Antriebsverbindung steht, wobei wenigstens eine Hilfswelle (21) vorgesehen ist, über die zwei benachbarte Antriebswellen (20) in Drehantriebsverbindung stehen, wobei die Hilfswelle (21) parallel zu den Rollenachsen (13) ausgerichtet ist, wobei die genannte Drehantriebsverbindung abseits der Rollenmodule (30) erfolgt.

13. Rollenförderer (10) nach einem der Ansprüche 11 oder 12, soweit dieser auf Anspruch 8 rückbezogen ist,
wobei zumindest einem Tragprofil (14) eine Seitenführung (83) zugeordnet ist, die sich parallel zur Förderrichtung (11) erstreckt, wobei die Seitenführung (83) ausschließlich an dem dem Tragprofil (14) zugeordneten Abdeckkörpern (80) befestigt ist, wobei sie an mehreren Abdeckkörpern (80) befestigt ist.
